Europäisches Patentamt

European Patent Office

Office européen des brevets

(11) Publication number: **0 090 855
B1**

# EUROPEAN PATENT SPECIFICATION

(45) Date of publication of patent specification: **12.07.89**

(51) Int. Cl.⁴: **G 02 F 1/133,** G 02 B 1/10

(21) Application number: **82903526.0**

(22) Date of filing: **05.10.82**

(86) International application number:
**PCT/US82/01442**

(87) International publication number:
**WO 83/01310 14.04.83 Gazette 83/09**

(54) **LIQUID CRYSTAL DISPLAY HAVING HIGH BRIGHTNESS REFLECTOR.**

(30) Priority: **06.10.81 US 308991**

(43) Date of publication of application:
**12.10.83 Bulletin 83/41**

(45) Publication of the grant of the patent:
**12.07.89 Bulletin 89/28**

(84) Designated Contracting States:
**CH DE FR GB LI NL**

(56) References cited:
**DE-A-2 557 641
GB-A-1 434 906
GB-A-2 064 805
US-A-2 601 806
US-A-2 911 682
US-A-3 883 214
US-A-3 938 242
US-A-4 097 131
US-A-4 106 859**

(73) Proprietor: **MINNESOTA MINING AND
MANUFACTURING COMPANY
3M Center, P.O. Box 33427
St. Paul, Minnesota 55133-3427 (US)**

(72) Inventor: **CHUNG, Chi H.
P.O. Box 33427
Saint Paul, MN 55133 (US)**
Inventor: **LU, Sun
P.O. Box 33427
Saint Paul, MN 55133 (US)**
Inventor: **CHUNG, David B.
P.O. Box 33427
Saint Paul, MN 55133 (US)**

(74) Representative: **Madgwick, Paul Roland et al
Ladas & Parry Isartorplatz 5
D-8000 München 2 (DE)**

Courier Press, Leamington Spa, England.

## Description

This invention relates to liquid crystal displays and to methods of fabricating such displays.

Liquid crystal displays, particularly those based on guest host or dye switching effects, in general comprise a cell having at least two spaced plates having electrodes selectively disposed on the inner surfaces of the two plates and a liquid crystal composition, such as doped with dyes, filled in the space between the plates. The display device includes means for selectively applying an electric field across the liquid crystal composition through the electrodes to modify the light absorption in the liquid crystal composition when the electric field exceeds a threshold value. The front plate through which the display is to be viewed, of course, is transparent, whereas the back plate typically employs a white reflector located outside the liquid crystal cell. This reflector, in many cases, is a thin layer of white material, such as barium sulfate, that has nearly 100 percent reflectivity and perfect Lambertian scattering providing for excellent off-axis viewing. However, since the reflector is located behind the liquid crystal layer at a distance at least equal to the back plate thickness, the image provided by the display is always accompanied by a slightly offset shadow.

Since liquid crystal display devices such as those utilizing various dye switching effects require scattering reflectors for adequate off-axis viewing, many researchers have tried depositing aluminum or other metallic reflectors over a glass surface uniformly frosted by chemical etching or fine polishing. Although they have been capable of achieving a reflective surface with optical properties very close to those of a standard white material, the shiny aluminum reflector appears darker when a layer of liquid crystal is placed on it. Thus, when the liquid crystal display device is fabricated with a metallic reflector deposited over a froster back glass plate, it has very low brightness and does not perform well.

Recently, a liquid crystal device has been reported which includes a reflector formed by a thick film silver compound screened and fired on a back glass plate. This reflector, which also is the back electrode of the liquid crystal device, has good brightness, but the resolution obtained in the device is restricted by the coarse patterns achievable by a thick film process. See for example T. J. Scheffer and J. Nehring, "Guest-Host Displays", the Physics and Chemistry of Liquid Crystal Devices, Edited by G. J. Sprokel, Plenum Press N.Y., 1980.

In the art of reflector design, there are surfaces known as spreading surface (See, for example, William B. Elmer, "The Optical Design of Reflectors," 2nd edition, John Wiley & Sons, N.Y., page 27 and following), the optical properties of which are excellent for a reflector placed inside a liquid crystal display. However, a typical spreading surface is generated by impressing or molding carefully designed patterns on a smooth surface. The most commonly used pattern is the positive or negative spherical segment having controlled depth and diameter such as result from peening. Many spreading reflectors are made this way on metals, and plastic materials. Unfortunately, it is impractical according to such prior art methods to form such surfaces on a glass plate for a liquid crystal display device.

Clearly, there remains a need for an improved liquid crystal display devices including reflectors which provide high brightness over extended viewing angles.

US 4,106,859 discloses light-scattering reflectors for liquid crystal display devices, the reflectors comprising a substrate of glass or rigid PVC foil which is roughened by sand-blasting, impressing with a grooved die or by other techniques to provide an irregular surface. A reflective metal coating is subsequently evaporated onto the roughened surface and optionally a protective layer of $SiO_2$ is deposited on the metal coating. However there is no suggestion in this patent specification that organic materials may be utilised to form the protective layer and the only liquid crystal display device specifically described employs a polariser interposed between the liquid crystal cell and an $SiO_2$-coated reflector, so that the latter is not in contact with the liquid crystal material.

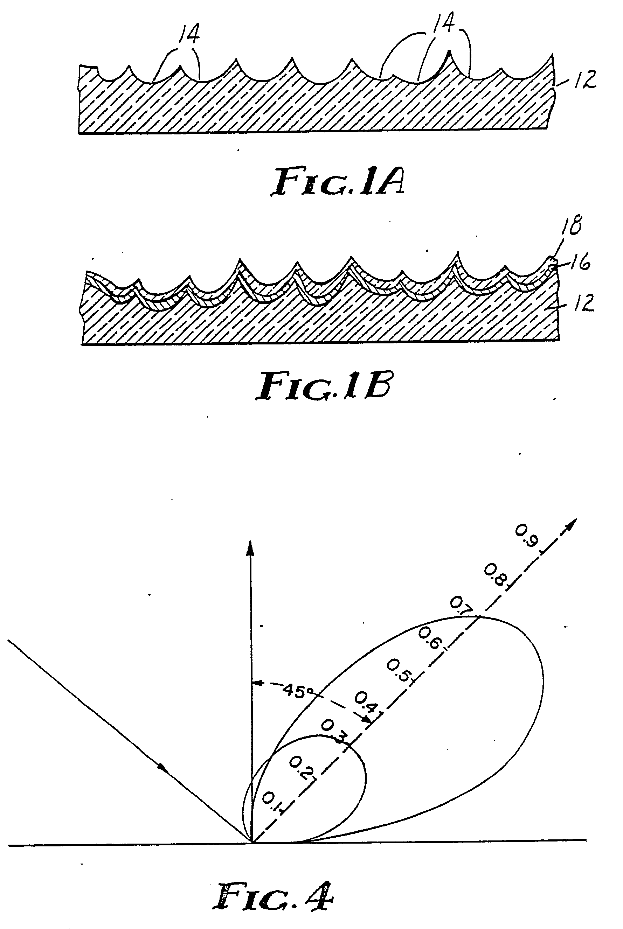

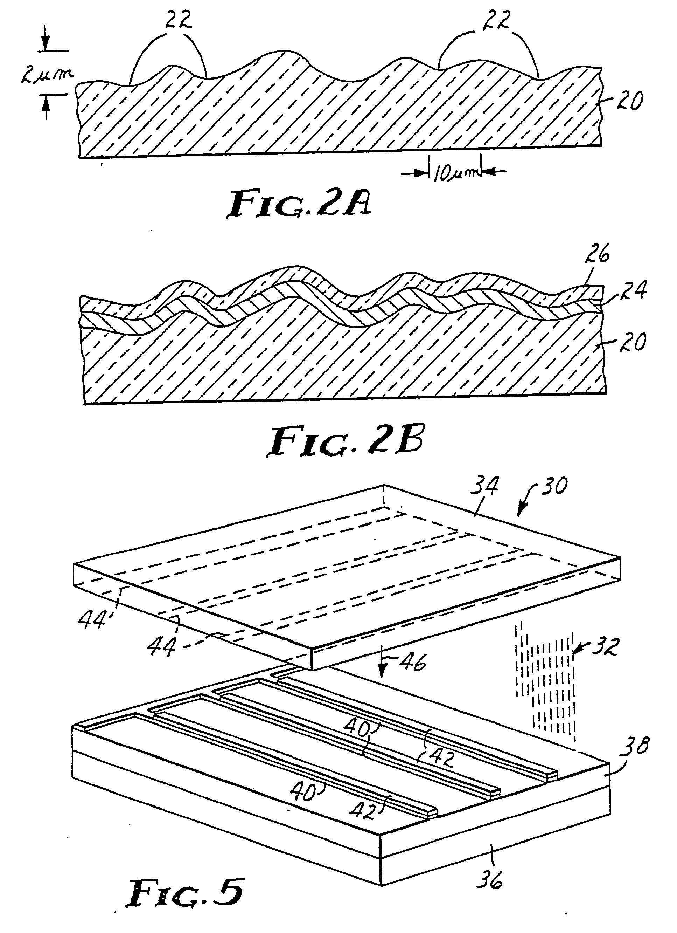

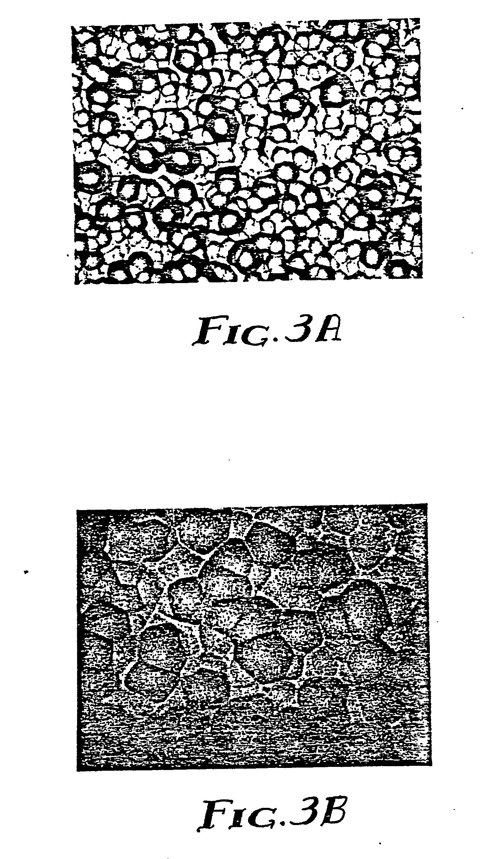

In one aspect the present invention provides a liquid crystal display device (Fig. 5) including a reflector assembly (Fig. 1B, Fig. 2B), said reflector assembly comprising one of the substrates of the device, this substrate having a micro-lenticular surface (Fig. 3A, Fig. 3B), a reflective structure overlying and substantially replicating the micro-lenticular surface, and a light transparent, low index outer organic layer overlying the reflective structure and also substantially replicating the micro-lenticular surface and in contact with liquid crystal material of the device which outer layer has an index of refraction not greater than 1.46 the index of refraction of $SiO_2$.

In another aspect the invention provides a method for fabricating a reflective surface for liquid crystal display devices (Fig. 5) comprising:

providing a substrate having on at least one major surface thereof a micro-lenticular surface (Fig. 3A, Fig. 3B),

depositing on said micro-lenticular surface a layer of light reflective material and thereafter depositing a light transparent organic material over and in optical contact with said layer of light reflective material, said light transparent material having an index of refraction not greater than 1.46, the index of refraction of $SiO_2$.

Preferred freatures are defined in the dependent claims.

Brief description of the drawings

Figure 1A is a schematic cross-sectional view of a glass plate having a micro-lenticular surface

Figure 1B is a schematic cross-sectional view of a reflector for use in the present invention;

Figure 2A is a schematic cross-sectional view of another plate prepared with a micro-lenticular surface for use in the present invention;

Figure 2B is a schematic cross-sectional view of the plate shown in Figure 2A further processed as a micro-lenticular reflector;

Figure 3A is a microphotograph at 200× of a micro-lenticular surface for use in the present invention;

Figure 3B is a microphotograph at 400× of a micro-lenticular surface for use in the present invention;

Figure 4 shows the reflective profile of a 45° incident beam on a lapped surface and on a micro-lenticular surface; and

Figure 5 is a perspective, exploded schematic view of a liquid crystal display device made in accordance with the present invention.

As indicated hereinabove, this invention is concerned with a method for preparing a liquid crystal display device which includes a new and improved reflector.

As shown in Figure 1A, the substrate for the reflector of the present invention preferably consists of a glass plate 12 which has a micro-lenticular surface on one major side of the glass plate. Basically, this micro-lenticular surface consists of concave shaped cavities or dimples having a depth ranging from about 0.5 to 2.5 μm and a diameter ranging from about 5 to 25 μm. Preferably, the generally concave shaped cavities 14, such as illustratively shown in Figure 1A, will have a depth of from 1 to 2μm, and a diameter from 10 to 20μm. The surfaces to a certain extent resemble those obtained on metal and plastic surfaces by the peening action.

As illustratively shown in Figure 1B, a highly reflective layer 16 is deposited on the micro-lenticular surface of the substrate. The reflective layer, for example, can consist of metals such as aluminum or silver. Alternatively, multi-layer dielectric films, such as $SiO_2$ and $MgF_2$ may also be used. Preferably, however, the reflective layer is aluminum or silver, and most preferably is silver.

Also, as shown in Figure 1B, a light transparent low index of refraction layer 18 is in optical contact with the reflective layer 16. The light transparent layer is composed of organic material and has an index of refraction not greater than that of $SiO_2$.

Significantly, the reflective surface of the display device of the present invention can provide a reflection brightness three times greater than a diffuse surface up to 40° viewing angle.

Not wishing to be limited by a theory, but by way of further explanation of the significance of the subject invention, it is believed that there are three possible physical mechanisms which are responsible for a metallic reflector deposited on a frosted glass surface to lose its brightness when a layer of a liquid crystal is placed on it. These physical mechanisms may be identified as:

(1) Total internal reflection,

(2) Absorption at the metal and dielectric (liquid crystal) interface, and

(3) Absorption due to surface plasma-wave.

In order to minimize the reduction in brightness caused by the mechanisms identified above, it is highly desirable to have a reflector for a liquid crystal display device that resembles a 100 percent spreading surface with a well-controlled spreading lobe in optical contact with the liquid crystal material. The reflective layer deposited upon the micro-lenticular surface of the substrate of the present invention has a light reflecting profile which is substantially a spreading profile. The addition of a light transparent layer with a low index of refraction over and in optical contact with the reflective layer has the effect of widening the cone where total internal reflection will not occur, thus expanding the viewing angle over that obtainable with a diffuse reflector.

The liquid crystal display devices of the present invention can achieve a 10:1 contrast ratio with greater than 55% brightness, compared with a 10:1 contrast with less than 40% brightness for similar displays with an external white reflector. The addition of the low index of refraction transparent overlayer is believed to cause light reflected from the micro-lenticular, reflectorized layer to be refracted back toward the direction of incident light. When the refracted light passes through the liquid crystal medium, it is incident on the top cover plate at a reduced angle. Accordingly, even though some light may be reflected from the micro-lenticular reflectorized surface at an angle which exceeds the critical angle, the refraction through the low index layer redirects some of the light, causing it to be incident on the top cover plate at less than the critical angle at that interface such that the light passes therethrough.

The above described reflector is particularly suitable for the liquid crystal display devices disclosed in US Patent A—4 391,492.

As disclosed in the said US Patent, a preferred liquid crystal display device of the present invention utilizes a thermally addressable medium including cholesteric smectic liquid crystal compounds together with pleochroic dyes to provide an absorbing state, such devices being particularly useful in large scale, multiplexed applications. The thermally sensitive medium has a transition between at least two thermal phases, the lower being a smectic phase, and the upper being preferably a cholesteric phase. The medium develops two textures in the smectic phase: a light absorbing texture and a homeotropic texture. The homeotropic texture is developed in portions of the medium by sensitizing the medium as it passes rapidly from an upper thermal phase to the lower, smectic phase.

The light absorbing texture is developed in the unsensitized portions of the medium as it goes through the transition to the smectic phase.

The medium is sensitized by applying a voltage to those portions of the medium to be addressed. The addressed portions develop a substantially transparent light state, while the unaddressed portions develop a substantially light absorbing state. The coloring agent or dye which is locked within the liquid crystal medium as it develops its light absorbing texture in the smectic phase will absorb most of the light passing through the medium, the liquid crystal acting as a vehicle to orient the dye molecules into a light absorbing position. Electrodes disposed adjacent the medium are provided for sensitization. Heating electrodes are also provided to heat the medium to the upper thermal phase. In a multiplexed device, the electrodes define a matrix of columns and rows disposed substantially at right angles to each other, and in different planes.

In order to obtain a pleasing, direct viewable display device, the row electrodes are made with a micro-lenticular substrate and overlying reflective and low index layers to provide high contrast as well as wide viewing angles. Such reflective electrodes further provide for a double pass of light through the cell thus enhancing light absorption. The row electrodes are heated sequentially with electric current, and in x—y matrix operation, the display is written by applying voltages on the column electrodes. During the writing process, only the dots associated with the row where the heating current has just been removed are affected. In other words, only the dots where the liquid crystal material is rapidly cooling to the smectic state respond to the writing pulses on the column electrodes.

As the liquid crystal material cools rapidly through the nematic or cholesteric phase to the smectic phase, it can form two different textures. With a voltage applied on the column electrodes, the liquid crystal material is switched to a homeotropic state during the nematic or cholesteric phase and assumes the homeotropic smectic A texture after cooling is completed. Without the applied voltage, a light absorbing texture is developed instead. Thus, the dots associated with a rapidly cooling row electrode can be written into transparent state or a light absorbing state by applying or not applying voltages on the column electrodes. The smectic or cholesteric-smectic material used in such an embodiment preferably has positive dielectric anisotropy.

The transition must be accomplished reasonably rapidly, hence rapid thermal pulses are used that heat the liquid crystal locally but do not significantly heat the surrounding glass. Hence the natural cooling period immediately following the passage of the heat pulse is also rapid and hence the liquid crystal medium passes through the nematic or cholesteric phase rapidly. This greatly enhances the optical effect and results in greater contrast.

Another preferred liquid crystal display device of the present invention utilizes the reflector structure as here disclosed in conjunction with a thermally activatable display device having a thermal barrier between the bottom, typically reflective electrodes, and a substrate which generally supports the liquid crystal medium, such as is disclosed in the above referenced US Patent 4 391 492.

Such a construction may comprise an underlying substrate such as a glass plate onto which is applied a subassembly of a polymeric base having a micro-lenticular top surface with successive overlying reflective and low index layers.

The insulative character of the thermal barrier may be defined as a thermal layer having a coefficient of thermal conductivity approximately less than $62.8 \times 10^{-4} Js^{-1}cm^{-1}{}^{\circ}C^{-1}(15 \times 10^{-4}$ cal $sec^{-1}cm^{-1}{}^{\circ}C^{-1})$.

This thermal layer will allow the liquid crystal medium to absorb significantly more of the heat generated by the heating electrode.

The thermal barrier or layer may have a cellular, voided or gas entrained structure to improve its insulative efficacy, although it will also function without this internal structure. This layer will generally include at least one organic polymer usually selected from a class of imides or amides. For this purpose, an imide quinoxaline polymer has been found to work well. Also, vapor coated films of xylylene polymers such as poly(p-xylylene) and poly(chloro-p-xylylene) are desirably utilized, thus providing a very even and uniform coating which accurately conforms to the underlying substrate. The thermal barrier should be made with an approximate thickness in a range from 0.5 to 100 μm.

Turning now to a preferred method of fabrication of the micro-lenticular reflector first a glass substrate is provided which has at least one major surface having concave shaped cavities with depths in the range of about 0.5 to 2.5 μm and diameters ranging from about 5 to 25 μm, and preferably depths of 1 to 2 μm and diameters of 10 to 20 μm. This micro-lenticular surface can be obtained by a combination of polishing and etching a glass plate. Indeed, it is particularly preferred to polish a soda-lime glass plate using a lapping machine, for example, such as a Highland Park Vi-Bro-Lap-model 20VL. In order to get effective polishing action, a thin layer of polishing mixture, such as a mixture of 30% by weight of 12.5 μm $Al_2O_3$ and 70% by weight of deionized water, to which 5 grams of detergent is added, is applied on the surface of the machine by brushing. The glass plate is then polished until a uniform diffuse surface is observed. For example, the soda-lime glass can be polished from about 10—30 minutes to achieve such a surface. After lapping, the glass is removed from the lapping machine and thoroughly cleaned. The so-polished glass has a very random rough surface. This surface roughness is reduced preferably by etching the glass in an appropriate etching solution, such as a 6:1 Buffered Oxide etch solution sold under the name of Buffor Oxide solution by Ashland Chemical Company, Specialty Chemical Division, Easton, Pennsylvania. Using the aforementioned Buffor Oxide solution, generally it is preferably to etch the soda-lime glass for approximately 30 minutes to achieve the desired micro-lenticular surface properties. After etching, of course, the surface is cleaned with appropriate solvent or solvents, such as by treatment with deionized water, followed by rinsing with methanol.

The reduced roughness surface thus obtained is shown in cross-sectional view in Figure 2A, where, as determined with a surface topological probe, it may be seen that the surface of the glass substrate 20 mainly consists of shallow, less than 2 µm deep cavities 22 of roughly 10—20 µm diameter. The micro-structure of the resultant surface is further shown in the microphotographs of Figures 3A and 3B, which were prepared at 200× and 400× magnification respectively.

As further shown in Figure 2B, after providing an appropriate micro-lenticular surface, a reflective layer 24 is deposited on the surface of the glass substrate 20. Any reflective material may be employed, such as aluminum, silver, metals and multi-film dielectric. However, in the practice of the present invention, it is particularly preferred to use aluminum or silver films. The reflective film can be deposited by well-known techniques. For example, aluminum or silver may be vacuum deposited on the micro-lenticular surface. The amount of metal deposited will, of course, depend on a variety of factors, such as the desired resistance of the device incorporating the reflective layer. In general, the light reflective layer will range in thickness from about 0.1 µm to about 1.5 µm.

The significance of providing a micro-lenticular surface is demonstrated in Figure 4, wherein the reflective profile of a 45° incident beam on a lapped surface having a 0.15 µm thin-film of Al deposited thereon is compared with the reflective profile of a 45° incident beam on micro-lenticular surface obtained in accordance with the steps outlined above, both surfaces having 0.15 µm thin-films of Al deposited thereon. In Figure 4, the brightness scale shown is, of course, an arbitrary scale.

Finally, as also shown in Figure 2B, after obtaining the requisite reflective surface layer 24 deposited on the micro-lenticular surface of the glass substrate 20, a light transparent layer 26 is placed over and in optical contact with the reflective layer 24. The light transparent layer, as indicated previously, is one which has an index of refraction as low as possible. Thus, for example, indices as high as that of thin-films of $SiO_2$, which are generally below about 1.46, and are preferably in the range from about 1.33 to 1.46, are preferred. Generally, the thickness of the low reflective index, transparent layer will be in the range of about 0.05 µm to 0.2 µm, and preferably about 0.1 µm.

Many low index organic materials, especially fluoropolymers, including polytetrafluoro-

ethylene (n=1.34), polyfluorochloroethylene (n=1.42) and poly-vinyladene fluoride (n=1.42) are suitable for forming the transparent layer. The light transparent material can be deposited by any one of the known techniques, such as electron beam evaporation, and thermal vapor deposition.

As indicated previously, the liquid crystal display devices having an internal reflector of the present invention, exhibit significant improvement in brightness over similar displays employing an external white reflector.

Now referring to Figure 5, an exploded view of a typical multiplexed, visual display device 30 according to the present invention, is illustrated. The device comprises a liquid crystal medium 32 containing a pleochroic dye, which medium is disposed between two glass substrate plates 34 and 36, respectively. The bottom substrate plate 36 has a micro-lenticular surface thereon. A thermal barrier 38 replicating the micro-lenticular surface is applied over the substrate 36, and a plurality of reflecting row electrodes 40, etc. are disposed over the barrier 38. Further, on top of the row electrodes are deposited films 42 of a low index material, all of which replicate the micro-lenticular surface on the substrate 36. The row electrodes 40 make up one half of the x—y matrix for addressing the liquid crystal medium 32. The row electrodes 40 are made of electrically conductive, light reflective material such as silver or aluminum, deposited on the barrier 38.

The top plate 34 supports a plurality of column electrodes 44, which make up the remaining half of the x—y matrix. The column electrodes 44 are electrically conductive and can be formed from materials such as indium oxide or tin oxide.

The liquid crystal medium 32 is generally sealed such as by an epoxy preform (not shown) between the two substrate plates 34 and 36 with the electrodes on each side in optical contact with the liquid crystal medium. Light (generally ambient) is passed through the glass composite as shown in the direction of arrows 46 and is reflected off the reflectorized electrodes 40.

The thermal barrier 38 insulates the row electrodes 40 and the liquid crystal medium 32 from the glass substrate 36 such that much of the heat generated by the row electrodes passes into the liquid crystal medium 32 and a smaller amount of the heat energy passes into substrate 36. This provides for a more efficient use of energy; the row electrodes now requiring less electrical current in order to cause a phase change in the liquid crystal medium.

In contrast to the micro-lenticular surfaced glass plates discussed above, the micro-lenticular surfaced thermal barrier 38 is desirably formed of a material having a low thermal conductivity, i.e., less than $62.8 \times 10^{-4} J\ sec^{-1} cm^{-1} C^{-1}$. Such a property is commonly met by most thermosetting a thermoplastic polymers, enabling the micro-lenticular surface to be readily formed thereon by conventional replication techniques. Where a positive, or convex micro-lenticular surface is desired, a previously prepared micro-lenticular surface glass plate may be used as a master. Conversely, when a negative or concave surface is desired, the glass plate may be further processed, such as by electro-forming techniques, to provide a highly durable convex shaped master from which large quantities of approximately surfaced polymeric sheets may be replicated.

**Claims**

1. A liquid crystal display device including a reflector assembly, said reflector assembly comprising one of the substrates (12, 20, 36) of the device, this substrate having a micro-lenticular surface, a reflective structure (16, 24, 40) overlying and substantially replicating the micro-lenticular surface, and a light transparent, low index outer organic layer (18, 26, 42) overlying the reflective structure and also substantially replicating the micro-lenticular surface and in contact with liquid crystal material (32) of the device which outer layer has an index of refraction not greater than 1.46 the index of refraction of $SiO_2$.

2. A display device according to claim 1 wherein said substrate comprises a glass plate (12, 20, 36) having concave shaped micro-cavities (14) on a surface thereof.

3. A display device according to claim 1, wherein said substrate (12, 20, 36) comprises a polymeric sheet having convex shaped micro-cavities on a surface thereof.

4. A display device according to any preceding claim, wherein said micro-lenticular surface consists of convex or concave shapes having a peak-to-peak amplitude ranging from 0.5 µm to 2.5 µm and a diameter ranging from 5 µm to 25 µm.

5. A display device according to any preceding claim, wherein said reflective structure (16, 24, 40) is selected from aluminum, silver and multiple layer dielectrics.

6. A display device according to any preceding claim, wherein said reflective structure (40) is a metallic, conductive electrode film (40).

7. A display device according to claim 6, wherein said conductive electrode film (40) is composed of aluminum or silver.

8. A display device according to claim 7, wherein said conductive electrode film (40) ranges in thickness from 0.1 µm to 1.5 µm.

9. A display device according to any preceding claim wherein said transparent layer (18, 26, 42) has an index of refraction of from 1.33 to 1.46.

10. A display device according to claim 9, wherein said transparent layer (18, 26, 42) has a thickness of from about 0.05 µm to 0.2 µm.

11. A display device according to any preceding claim, wherein the organic transparent layer (18, 26, 42) is selected from fluoropolymers, including polytetrafluoroethylene, polyfluorochloroethylene, and polyvinylidene fluoride.

12. A method for fabricating a reflective surface for liquid crystal display devices comprising:

providing a substrate (12, 20, 36) having on at least one major surface thereof a micro-lenticular surface,

depositing on said micro-lenticular surface a layer of light reflective material (16, 24, 40) and thereafter depositing a light transparent organic material (18, 26, 42) over and in optical contact with said layer of light reflective material, said light transparent material having an index of refraction not greater than 1.46, the index of refraction of $SiO_2$.

13. A method according to claim 12 comprising providing said micro-lenticular surface by lapping a glass plate (12, 20, 36) and then thereafter etching said lapped glass plate for a time sufficient to provide a surface having a plurality of concave indentations (14) on the surface thereof ranging in thickness and depth from about 0.5 to 2.5 µm and having diameters ranging from about 5 to 25 µm.

14. A method according to claim 13 comprising continuing said etching for approximately 30 minutes.

15. A method according to any of claims 12 to 14 comprising depositing said light reflective layer (16, 24, 40) by vacuum deposition.

16. A method according to claim 15 comprising depositing said light reflective layer (16, 24, 40) until it has a thickness ranging from about 0.1 µm to 1.5 µm.

17. A method according to claim 16 comprising depositing said light transparent material (18, 26, 42) to a thickness generally ranging from about 0.05 µm to 0.2 µm.

18. A method according to claim 13 or claim 14, further comprising using said lapped and etched glass plate (20) as a master, forming therefrom at least one polymeric substrate having a micro-lenticular replicated surface and depositing on said micro-lenticular replicated surface said layer of light-reflective material (16, 24, 40).

**Patentansprüche**

1. Flüssigkristallanzeigeeinrichtung mit einer Reflektoranordnung, die eines der Substrate (12, 20, 36) der Einrichtumg umfaßt, wobei das Substrat eine Mikrolinsenrasterfläche besitzt, ferner ein reflexionsfähiges Gebilde (16, 24, 40), das über der Mikrolinsenrasterfläche liegt und im wesentlichen einen Abdruck derselben darstellt, und eine durchsichtige, niedrigindizierte äußere organische Schicht (18, 26, 42), die ebenfalls einen Abdruck der Mikrolinsenrasterfläche darstellt und mit Flüssigkristallmaterial (32) der Einrichtung in Berührung steht und einen Brechungsindex hat, der nicht höher ist als das 1,46-fache des Brechungsindexes von $SiO_2$.

2. Anzeigeeinrichtung nach Anspruch 1, dadurch gekennzeichnet, daß das Substrat eine Glasscheibe (12, 20, 36) aufweist, die auf einer Oberfläche konkave Mikrovertiefungen (14) besitzt.

3. Anzeigeeinrichtung nach Anspruch 1, dadurch gekenneichnet, daß das Substrat (12, 20, 36) eine polymeres Blatt aufweist, das auf einer Oberfläche konvexe Mikrovertiefungen besitzt.

4. Anzeigeeinrichtung nach einem der vorhergehenden Ansprüche, dadurch gekennzeichnet, daß die Mikrolinsenrasterfläche aus konvexen oder konkaven Formen besteht, die eine Amplitude von Spitze zu Spitze von 0,5 μm bis 2 μm und einen durchmesser von 5 μm bis 25 μm haben.

5. Anzeigeeinrichtung nach einem der vorhergehenden Ansprüche, dadurch gekennzeichnet, daß das reflexionsfähige Gebilde (16, 24, 40) aus Aluminium, Silber und mehrschichtigen Dielektrika ausgewählt ist.

6. Anzeigeeinrichtung nach einem der vorhergehenden Ansprüche, dadurch gekennzeichnet, daß das reflexionsfähige Gebilde (40) eine leitfähige metallische Elektrodenfolie (40) ist.

7. Anzeigeeinrichtung nach Anspruch 6, dadurch gekennzeichnet, daß die leitfähige Elektrodenfolie (40) aus Aluminium oder Silber besteht.

8. Anzeigeeinrichtung nach Anspruch 7, dadurch gekennzeichnet, daß die leitfähige Elektrodenfolie (40) eine Dicke im Bereich von 0,1 μm bis 1,5 μm hat.

9. Anzeigeeinrichtung nach einem der vorhergehenden Ansprüche, dadurch gekennzeichnet, daß die durchsichtige transparente Schicht (18, 26, 42) einen Brechungsindex von 1,33 bis 1,46 hat.

10. Anzeigeeinrichtung nach Anspruch 9, dadurch gekennzeichnet daß die durchsichtige Schicht (18, 26, 42) eine Dicke von etwa 0,05 μm bis 0.2 μm hat.

11. Anzeigeeinrichtung nach einem der vorhergehenden Ansprüche, dadurch gekennzeichnet, daß die durchsichtige organische Schicht (18, 26, 42) aus den Fluorpolymeren einschließlich von Polytetrafluorethylen, Polyfluorchlorethylen und Polyvinylidenfluorid ausgewählt ist.

12. Verfahren zum Herstellen einer reflexionsfähigen Fläche für Flüssigkristallanzeigeeinrichtungen, in dem

ein Substrat (12, 20, 36) verwendent wird, das auf mindestens einer Breitseite eine Mikrolinsenrasterfläche besitzt,

auf die Mikrolinsenrasterfläche eine Schicht aus einem lichtreflektierenden Material (16, 24, 40) aufgetragen wird und danach auf die Schicht aus lichtreflektierendem Material und in optischer Berührung mit ihr ein durchsichtiges organisches Material (18, 26, 42) aufgetragen wird, dessen Brechungsindex nicht höher ist als das 1,46-fache des Brechungsindexes von SiO₂.

13. Verfahren nach Anspruch 12, in dem zur Ausbildung der Mikrolinsenrasterfläche eine Glasscheibe (12, 20, 36) geläppt und danach solange geätzt wird, bis eine Fläche gebildet worden ist, die eine Mehrzahl von konkaven Vertiefungen besitzt, die eine Dicke und eine Tiefe im Bereich von etwa 0.5 bis 2,5 μm und Durchmesser im Bereich von etwa 5 bis 25 μm haben.

14. Verfahren nach Anspruch 13, in dem etwa 30 min lang geätzt wird.

15. Verfahren nach einem der Ansprüche 12 bis 14, in dem die lichtreflektierende Schicht (16, 24, 40) im Vakuum aufgetragen wird.

16. Verfahren nach Anspruch 15, in dem die lichtreflektierende Schicht (16, 24, 40) aufgetragen wird, bis sie eine Dicke im Bereich von etwa 0.1 μm bis 1,5 μm hat.

17. Verfahren nach Anspruch 16, in dem das durchsichtige Material (18, 26, 42) in einer Dicke im Bereich von im allgemeinen etwa 0,05 μm bis 0.2 μm aufgetragen wird.

18. Verfahren nach Anspruch 13 oder 14, in dem die geläppte und geätzte Glasscheibe (20) als Matrize verwendet wird, von der mindestens ein polymeres Substrat hergestellt wird, das al Abdruck eine Mikrolinsenrasterfläche besitzt, und auf die als Abdruck erhaltenen Mikrolinsenrasterfläche die Schicht aus dem lichtreflektierenden Material (16, 24, 40) aufgetragen wird.

## Revendications

1. Dispositif d'affichage à cristaux liquides comprenant un ensemble réflecteur, ledit ensemble réflecteur comprenant un des substrats (12, 20, 36) du dispositif, ce substrat ayant une surface microlenticulaire, une structure réfléchissante (16, 24, 40) recouvrant et reproduisant essentiellement la surface microlenticulaire, et une couche organique extérieure (18, 26, 42) transparente à la lumière à faible indice, recouvrant la structure réfléchissante et reproduisant également essentiellement la surface microlenticulaire et en contact avec les cristaux liquides (32) du dispositif, la couche extérieure ayant un indice de réfraction qui n'est pas supérieur de 1,46 à l'indice de réfraction de SiO₂.

2. Dispositif d'affichage selon la revendication 1, dans lequel ledit substrat comprend une plaque de verre (12, 20, 36) ayant des microcavités de forme concave (14) sur une de ses surfaces.

3. Dispositif d'affichage selon la revendication 1, dans lequel ledit substrat (12, 20, 36) comprend une feuille polymère ayant des microcavités de forme convexe sur une de ses surfaces.

4. Dispositif d'affichage selon l'une quelconque des revendications précédentes, dans lequel ladite surface microlenticulaire est constituée de formes convexes ou concaves ayant une amplitude de crête à crête comprise entre 0,5 μm et 2,5 μm et un diamètre compris entre 5 μm et 25 μm.

5. Dispositif d'affichage selon l'une quelconque des revendications précédentes, dans lequel ladite structure réfléchissante (16, 24, 40) est choisie parmi l'aluminium, l'argent et les diélectriques multicouches.

6. Dispositif d'affichage selon l'une quelconque des revendications précédentes, dans lequel ladite structure réfléchissante (40) est une pellicule métallique conductrice constituant une électrode (40).

7. Dispositif d'affichage selon la revendication 6, dans lequel ladite pellicule conductrice constituant une électrode (40) est composée d'aluminium ou d'argent.

8. Dispositif d'affichage selon la revendication 7, dans lequel ladite pellicule conductrice constituant une électrode (40) a une épaisseur comprise entre 0,1 µm et 1,5 µm.

9. Dispositif d'affichage selon l'une quelconque des revendications précédentes, dans lequel ladite couche transparente (18, 26, 42) a un indice de réfraction de 1,33 à 1,46.

10. Dispositif d'affichage selon la revendication 9, dans lequel ladite couche transparente (18, 26, 42) a une épaisseur d'environ 0,05 µm à 0.2 µm.

11. Dispositif d'affichage selon l'une quelconque des revendications précédentes, dans lequel la couche organique transparente (18, 26, 42) est choisie parmi les fluoropolymères, y compris le polytétrafluoroéthylène, le polyfluorohloroéthylène et le poly(fluorure de vinylidène).

12. Procédé pour fabriquer une surfac réfléchissante pour dispositifs d'affichage à cristaux liquides consistant à:
— faire appel à un substrat (12, 20, 36) ayant sur au moins une de ses surfaces principales une surface microlenticulaire,
— déposer sur ladite surface microlenticulaire une couche d'une matière réfléchissant la lumière (16, 24, 40), puis déposer une matière organique transparente à la lumière (18, 26, 42) sur ladite couche de matière réfléchissant la lumière et en contact optique avec elle, ladite matière transparente à la lumière ayant un indice de réfraction qui n'est pas supérieur de 1,46 à l'indice de réfraction de $SiO_2$.

13. Procédé selon la revendication 12 consistant à faire appel à ladite surface microlenticulaire par rodage d'une plaque de verre (12, 20, 36), puis attaque de ladite plaque de verre rodée pendant un temps suffisant pour produire une surface ayant plusieurs empreintes concaves (14) sur sa surface, dont l'épaisseur et la profondeur sont comprises dands la gamme d'environ 0,5 à 2,5 µm et ayant des diamètres compris dans la gamme d'environ 5 à 25 µm.

14. Procédé selon la revendication 13 comprenant la poursuite de ladite attaque pendant environ 30 minutes.

15. Procédé selon l'une quelconque des revendiations 12 à 14 comprenant le dépôt sous vide de ladite couche réfléchissant la lumière (16, 24, 40).

16. Procédé selon la revendication 15 comprenant le dépôt de ladite couche réfléchissant la lumière (16, 24, 40) jusqu'à ce qu'elle ait une épaisseur comprise dans la game d'environ 0,1 µm à 1,5 µm.

17. Procédé selon la revendication 16 comprenant le dépôt de ladite matière transparente à la lumière (18, 26, 42) sur une épaisseur comprise de façon générale, dans la gamme d'environ 0,05 µm à 0,2 µm.

18. Procédé selon la revendication 13 ou la revendication 14, comprenant de plus l'utilisation de ladite plaque rodée et attaquée (20) comme modèle pour former au moins un substrat polymère ayant une surface microlenticulaire reproduite, et le dépôt sur ladite surface microlenticulaire reproduite de ladite couche de matière réfléchissant la lumière (16, 24, 40).

FIG.1A

FIG.1B

FIG.4

22          22

2μm                                    20

10μm

*FIG.2A*

26
24
20

*FIG.2B*

34    30

44'
44                    46        32

40'
42        38

40'
42

36

*FIG.5*

2

*Fig.3A*

*Fig.3B*